# EUROPEAN PATENT APPLICATION

(11) **EP 4 601 031 A1**
(43) Date of publication of application: **13.08.2025**
(21) Application number: 23875081.4
(22) Date of filing: 07.09.2023
(51) Int. Cl.: H01M 4/36, H01M 4/583, H01M 10/0525, H01M 4/02

(54) **ANODE ACTIVE MATERIAL FOR SECONDARY BATTERIES AND SECONDARY BATTERY INCLUDING SAME**

(30) Priority: 06.10.2022 KR 20220128037
(71) Applicant: SK On Co., Ltd., Seoul 03161 (KR)
(72) Inventor: LEE, Mi Ryeong, Daejeon 34124 (KR); LEE, Jong Hyuk, Daejeon 34124 (KR)
(74) Representative: Stolmár & Partner Patentanwälte PartG mbB
(86) International application number: PCT/KR2023/013424
(87) International publication number: WO 2024/076012

(57) **Abstract**

An anode active material for a lithium secondary battery according to exemplary embodiments includes a core particle; a crown ether coating formed on the core particle and including crown ether; and conductive particles formed on the crown ether coating or within the crown ether coating. Accordingly, the crown ether coating including the crown ether compound may improve stability and reduce resistance, while the conductive particles may enhance output characteristics.

## Description

### [Technical Field]

The present disclosure relates to an anode active material for a secondary battery and a secondary battery including the same, and more specifically, to an anode active material for a secondary battery having a core-shell structure and a secondary battery including the anode active material.

### [Background Art]

A secondary battery is a battery that can be repeatedly charged and discharged, and is widely applied to portable electronic communication devices such as camcorders, mobile phones, and laptop computers with the advancement of information and communication technology and display industries. Examples of the secondary battery may include a lithium secondary battery, a nickel-cadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

The lithium secondary battery may include: an electrode assembly including a cathode, an anode, and a separation membrane (separator); and an electrolyte in which the electrode assembly is impregnated. In addition, the lithium secondary battery may further include, for example, a pouch-type outer case in which the electrode assembly and the electrolyte are housed.

For example, the anode may use carbon-based or silicon-based active material particles as the anode active material. When charging and discharging cycles are repeated, side reactions may occur due to contact between the active material particles and the electrolyte, and mechanical and chemical damage such as cracks in the particles may also occur.

When the composition and structure of the anode active material are modified to improve the stability of the active material particles, the conductivity may be degraded, which may lead to a reduction in the output of the secondary battery. Therefore, it is necessary to develop an anode active material that can ensure lifespan (i.e., cycle life) stability, and maintain desirable output and capacity characteristics.

For example, Korean Patent Laid-Open Publication No. 2017-0099748 discloses an electrode assembly for a lithium secondary battery and a lithium secondary battery including the same.

### [Summary of Invention]

### [Problems to be Solved by Invention]

An object of the present disclosure is to provide an anode active material for a secondary battery that exhibits improved stability and electrical characteristics.

Another object of the present disclosure is to provide a secondary battery that exhibits improved stability and electrical characteristics.

### [Means for Solving Problems]

An anode active material for a lithium secondary battery according to exemplary embodiments of the present disclosure includes: a core particle; a crown ether coating formed on the core particle and including a crown ether compound; and conductive particles formed on the crown ether coating.

In some embodiments, the core particle may include a graphite-based active material, an amorphous carbon-based active material, a silicon-based active material, or a mixture of two or more thereof.

In some embodiments, the core particle may include at least one of natural graphite and artificial graphite.

In some embodiments, the crown ether coating may have a thickness of 1 nm to 100 nm.

In some embodiments, the crown ether compound may include a nitrogen atom (N) or a sulfur atom (S).

In some embodiments, the crown ether compound may include at least one of 10-crown-3, 11-crown-3, aza-11-crown-3, 12-crown-3, aza-12-crown-3, 12-crown-4, benzo-12-crown-4, tetrathia-12-crown-4, aza-12-crown-4, diaza-12-crown-4, 14-crown-4, tetrathia-14-crown-4, benzo-14-crown-4, dibenzo-14-crown-4, didecalino-14-crown-4, decalino-14-crown-4, 15-crown-5, aza-15-crown-5, diaza-15-crown-5, benzo-15-crown-5, dibenzo-15-crown-5, cyclohexane-15-crown-5, 16-crown-4, 16-crown-5, 18-crown-6, hexathia-18-crown-6, aza-18-crown-6, diaza-18-crown-6, benzo-18-crown-6, dibenzo-18-crown-6.

In some embodiments, a content of the crown ether compound may be 0.01% by weight to 5% by weight based on a total weight of the core particle.

In some embodiments, the crown ether coating may be substantially composed of the crown ether compound.

In some embodiments, the conductive particles cover the entire crown ether coating.

In some embodiments, at least a portion of the conductive particles may be embedded within the crown ether coating and protrude from the surface of the crown ether coating.

In some embodiments, the conductive particles may be disposed so as not to be in contact with the core particle.

In some embodiments, at least a portion of the conductive particles may penetrate through the crown ether coating.

In some embodiments, the conductive particles may include at least one of lithium titanate (LTO), Super P, carbon black, acetylene black, Ketjen black, carbon flakes, activated carbon, graphene, carbon nanotubes (CNT), carbon nanofibers (CNF), metal fibers, and metal particles.

In some embodiments, anode active material for a lithium secondary battery may further include a carbon coating which is disposed between the core particle and the crown ether coating, and covers the outer surface of the core particle.

In some embodiments, the carbon coating may include an amorphous carbon-based material.

In some embodiments, a ratio of a thickness of the crown ether coating to a thickness of the carbon coating may be greater than 0 and 5 or less.

A lithium secondary battery according to exemplary embodiments of the present disclosure includes: a cathode; and an anode disposed to face the cathode and including the above-described anode active material for a lithium secondary battery.

### [Advantageous effects]

A crown ether coating including a crown ether compound may be formed on the core particles of the anode active material. Lithium ion pathways may be formed within the crown ether coating through the crown ether compound, thereby preventing an increase in resistance caused by the crown ether coating. Accordingly, the ion conductivity of the anode active material may be improved, and the output characteristics and fast-charging characteristics of the secondary battery may be enhanced.

In addition, through the crown ether coating, side reactions and damage such as cracks on the outer surface of the core particles providing anode activity may be suppressed, thereby improving lifespan stability.

Conductive particles may be disposed on the crown ether coating or within the crown ether coating. The electronic conductivity of the anode active material may be increased by the conductive particles. For example, the conductive particles may form migration pathways for electrons and ions between adjacent anode active material particles. Accordingly, a reduction in output caused by the crown ether coating may be prevented, and the activity of the anode active material may be increased.

The anode active material may further include a carbon coating. Accordingly, the core particles may exhibit increased lifespan or durability even after repeated charging and discharging cycles, and the anode active material may retain high capacity and high-rate characteristics.

### [Brief Description of Drawings]

FIG. 1 is a schematic cross-sectional view illustrating an anode active material for a secondary battery according to exemplary embodiments.
FIG. 2 is a schematic plan view illustrating a secondary battery according to exemplary embodiments.
FIG. 3 is a schematic cross-sectional view illustrating the secondary battery according to exemplary embodiments.

### [Mode for Carrying out Invention]

The embodiments of the present disclosure provide an anode active material for a secondary battery, which includes a core particle, a crown ether coating and conductive particles formed on the core particle.

In addition, the embodiments of the present disclosure provide a secondary battery including the anode active material for a secondary battery.

Hereinafter, the embodiments of the present disclosure will be described in detail with reference to the accompanying drawings. However, these embodiments are merely examples, and the present disclosure is not limited to the specific embodiments described as the examples.

### <Anode active material for secondary batteries>

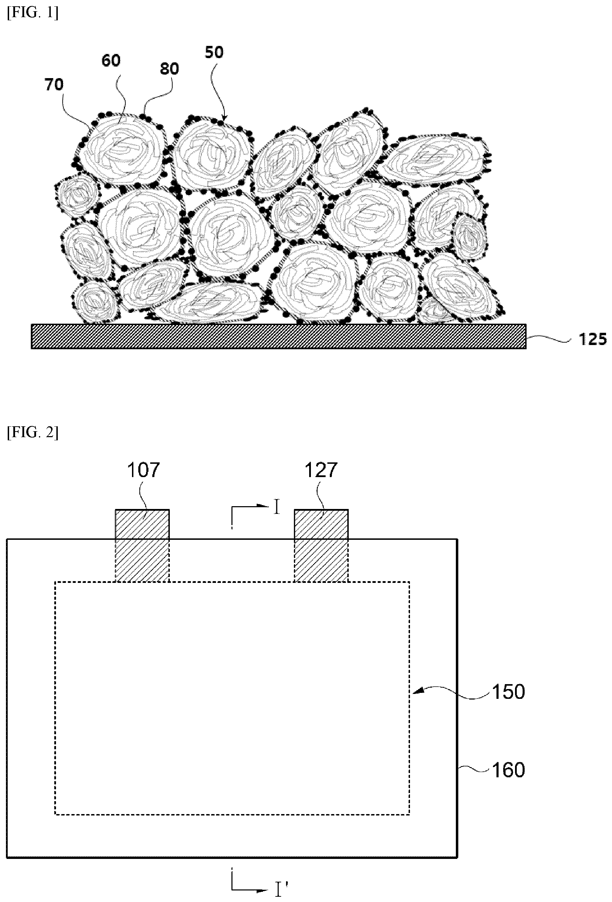

FIG. 1 is a schematic cross-sectional view illustrating an anode active material for a secondary battery (hereinafter, may be abbreviated as an "anode active material") according to exemplary embodiments. For example, FIG. 1 is a cross-sectional view schematically illustrating a shape in which anode active materials are aggregated on an anode current collector 125.

Referring to FIG. 1, an anode active material 50 may include a core particle 60, a crown ether coating 70, and conductive particles 80.

The core particles 60 may be provided as main particles that provide substantial anode activity. For example, the core particle 60 may include an amorphous carbon-based active material, a graphite-based active material, or a silicon-based active material. These may be included alone or in combination of two or more thereof.

In some embodiments, the core particle 60 may include a graphite-based active material, such as natural graphite and/or artificial graphite.

In one embodiment, the core particle 60 may include artificial graphite. Artificial graphite may exhibit relatively high chemical and thermal stability compared to natural graphite. Therefore, by employing artificial graphite as the core particle 60, the high-temperature storage or high-temperature lifespan characteristics of the secondary battery may be improved. In addition, even when the core particle 60 includes artificial graphite, the output and capacity may be sufficiently increased by the conductive particles 80.

In some embodiments, the core particle 60 may include a silicon-based active material. The silicon-based active material may include silicon (Si), SiO_{X} (0<x<2), or SiOₓ (0<x<2) including a lithium compound or a magnesium compound.

In one embodiment, the SiOₓ including the lithium compound or the magnesium compound may be SiOₓ that has been subjected to pre-treatment with lithium or magnesium. For example, the SiOₓ including the lithium compound or the magnesium compound may include lithium silicate or magnesium silicate.

In some embodiments, the core particle 60 may also include a silicon-carbon-based active material. The silicon-carbon-based active material may include, for example, silicon carbide (SiC), or silicon-carbon particles having a core-shell structure.

The silicon-carbon particles may be formed, for example, by depositing a silicon layer on the surface of a graphite core. In one embodiment, the silicon-carbon particles may be prepared by coating commercially available graphite particles with a silicon precursor compound, such as a silane compound through a chemical vapor deposition (CVD) process to form a silicon layer.

In some embodiments, the core particle 60 may include an amorphous carbon-based active material derived from hard carbon, coke, pitch or the like. In one embodiment, the core particle 60 may include a mixture of two or more of the above-described graphite-based active materials, silicon-based active materials, or amorphous carbon-based active materials.

According to exemplary embodiments, the core particles 60 may have a mean particle diameter (D₅₀) of 1 µm to 100 µm. D50 refers to a particle diameter at 50% of a volume fraction in the particle diameter cumulative distribution of the core particles. For example, the core particles 60 may have a mean particle diameter (D₅₀) of 3 µm to 20 µm.

In some embodiments, a carbon coating may be formed on the surface of the core particle 60. For example, the carbon coating may be formed on the surface of the core particle 60 to cover an outer surface of the core particle 60.

In one embodiment, the carbon coating may be partially formed on the outer surface of the core particle 60.

In one embodiment, the carbon coating may include an amorphous carbon-based material. For example, the core particle 60 and the carbon coating may have a core-shell structure in which at least a portion of the outer surface of the above-described the graphite-based active material or the silicon-based active material is coated with an amorphous carbon-based material.

As the carbon coating including the amorphous carbon-based material is formed on the surface of the core particle 60, the thermal stability and mechanical properties of the anode active material 50 may be further improved. In addition, since the amorphous carbon-based material reacts prior to the core particle 60 at a relatively high reaction potential, degradation of the core particle 60 caused by repeated charging and discharging cycles may be suppressed.

Therefore, the anode activity of the core particle 60 may be maintained for a long period of time, and an anode active material 50 that exhibits high output and high capacity may be provided.

In some embodiments, the carbon coating may have a thickness of 1 nm to 1,000 nm, for example, 5 nm to 300 nm. Within the above range, heat resistance and stability may be further improved without causing a degradation in the output and capacity of the lithium secondary battery.

The crown ether coating 70 may be formed on the surface of the core particle 60. In some embodiments, the entire outer surface of the core particle 60 may be substantially surrounded or covered by the crown ether coating 70.

Therefore, side reactions, oxidation, corrosion, cracks, etc. on the surface of the core particle 60 may be reduced or prevented. For example, as the secondary battery undergoes repeated charging and discharging cycles, the surface of the core particle 60 may become mechanically and chemically damaged. In addition, gas may be generated due to the side reactions when the surface of the core particle 60 comes into contact with the electrolyte.

According to exemplary embodiments, since the crown ether coating 70 protects the surface of the core particle 60, direct exposure to the electrolyte and the resulting damage may be suppressed. In addition, the crown ether coating 70 may also function as an elastic body that mitigates the expansion of the core particle 60. Therefore, the occurrence of internal cracks in the core particle 60 caused by repeated charging and discharging cycles may be suppressed.

In one embodiment, the crown ether coating 70 may be partially formed on the outer surface of the core particle 60. In this case, for example, the crown ether coating 70 may cover at least 50% of the outer surface area of the core particle 60.

In some embodiments, when a carbon coating is formed on the outer surface of the core particle 60, the crown ether coating 70 may be formed on the outer surface of the carbon coating.

The crown ether coating 70 may include a crown ether compound. Since the crown ether compound exhibits high conductivity for lithium ions, it may supplement the ion conductivity of the anode active material.

For example, the crown ether compound may function as a host material for guest ions (e.g., lithium ions). Therefore, since the crown ether compound may selectively bind to and release lithium ions, the mobility of ions within the crown ether coating 70 may be improved.

Accordingly, an increase in resistance caused by the crown ether coating 70 may be prevented, thereby improving the output and capacity of the lithium secondary battery.

In one embodiment, the crown ether compound may be present in a dispersed or blended form within the crown ether coating 70. For example, a polymer matrix including the crown ether compound may be applied to the core particle 60 to form the crown ether coating 70.

In some embodiments, the crown ether compound may include a macrocyclic ring in its molecular structure, for example, the macrocyclic ring may have a repeating unit of a -R₁-R₂-O-structure. Here, R₁ and R₂ may each independently be a single bond, an alkylene group having 1 to 6 carbon atoms, a cycloalkylene group having 3 to 12 carbon atoms, a bicycloalkylene group having 4 to 12 carbon atoms, an arylene group having 6 to 12 carbon atoms, a carbonyl group, an ester group, or an amide group, etc.

For example, a crown ether compound may be represented as "n-crown-m," where n denotes the total number of atoms included in the macrocyclic ring, and m denotes the number of oxygen atoms included in the macrocyclic ring. n and m may each independently be an integer of 2 or more.

In some embodiments, the crown ether compound may include a nitrogen atom (N) or a sulfur atom (S). For example, at least one of the oxygen atoms included in the macrocyclic ring may be substituted with a nitrogen atom or a sulfur atom. For example, at least one of the oxygen atoms in the crown ether compound represented as "n-crown-m" may be substituted with a nitrogen atom or a sulfur atom.

The macrocyclic ring of the crown ether compound may function as a cavity capable of accommodating guest ions (e.g., lithium ions). For example, the crown ether compound may exhibit strong binding force or affinity for cations due to a plurality of heteroatoms included in the macrocyclic ring.

For example, since the heteroatoms included in the macrocyclic ring have lone electron pairs, the crown ether compound may exhibit a strong negative charge on an inner side of the ring. Accordingly, a metal cation lacking electrons may readily coordinate with the crown ether compound to form a complex. Therefore, the crown ether compound may provide a migration pathway for lithium ions within the crown ether coating layer.

In some embodiments, the crown ether compound may include a macrocyclic ring having 10 to 18 atoms. For example, the crown ether compound may include n-crown-m, where n is 10 to 18 and m is 1 or more. Within the above range, it may help to prevent the crown ether compound from becoming excessively bulky. Accordingly, the structural stability of the crown ether coating 70 may be further improved, and both ionic conductivity and electronic conductivity may be further enhanced.

In some embodiments, the crown ether compound may include a carbonyl group, an ester group or an amide group in its molecular structure. For example, at least one of the carbon atoms in the crown ether compound may be substituted with or bonded to a carbonyl group, an ester group or an amide group.

In some embodiments, the crown ether compound may include 10-crown-3, 11-crown-3, aza-11-crown-3, 12-crown-3, aza-12-crown-3, 12-crown-4, benzo-12-crown-4, tetrathia-12-crown-4, aza-12-crown-4, diaza-12-crown-4, 14-crown-4, tetrathia-14-crown-4, benzo-14-crown-4, dibenzo-14-crown-4, didecalino-14-crown-4, decalino-14-crown-4, 15-crown-5, aza-15-crown-5, diaza-15-crown-5, benzo-15-crown-5, dibenzo-15-crown-5, cyclohexane-15-crown-5, 16-crown-4, 16-crown-5, 18-crown-6, hexathia-18-crown-6, aza-18-crown-6, diaza-18-crown-6, benzo-18-crown-6, dibenzo-18-crown-6, etc. These may be used alone or in combination of two or more thereof.

In some embodiments, a content of the crown ether compound based on a total weight of the core particles 60 may be about 0.05% by weight ("wt%") to 5 wt%. If the content of the crown ether compound is less than 0.05 wt%, the content of the crown ether compound insufficient relative to the eluted lithium ions, resulting in reduced ionic conductivity. If the content of the crown ether compound exceeds 5 wt%, the resistance may rather relatively increase, and side reactions caused by the crown ether compound may occur.

In one embodiment, the content of the crown ether compound may be 0.5 wt% to 3 wt%. Within the above range, a sufficient ion conductive pathway may be secured without inhibiting the anode activity of the core particle 60.

In some embodiments, the crown ether compounds may polymerize or cross-link with each other to form a film. For example, a solution containing a monomer, oligomer or polymer of a crown ether compound dissolved therein may be applied to the core particle 60, and then heated to form the crown ether coating 70. Accordingly, polymerization and cross-linking of the materials may be performed on the surface of the core particle 60. In this case, the crown ether polymer may form a skeleton of the crown ether coating 70.

In some embodiments, a crown ether compound in monomeric or oligomeric form may be dispersed and present within the crown ether coating 70. Accordingly, the crown ether compound in the monomeric or oligomeric form may be uniformly distributed throughout the crown ether coating 70 and exhibit mobility, thereby further increasing the number of electron/ion migration pathways provided by the crown ether compound.

In some embodiments, the crown ether coating 70 may include only a crown ether compound. Accordingly, the electronic and ionic conductivity of the crown ether coating 70 may be further improved. For example, if other polymer materials are included in the crown ether coating 70, the resistance in the anode may relatively increase due to the low conductivity of the polymer materials. In addition, the mass energy density or volumetric capacity may relatively decrease due to the volume occupied by the polymer materials.

In one embodiment, since the crown ether coating 70 is substantially composed of the crown ether compound, electrons and ions may more easily migrate into and out of the crown ether coating 70. Accordingly, the internal resistance of the anode active material may be reduced, and the output and fast-charging characteristics of the lithium secondary battery may be improved.

In some embodiments, the polymer material (e.g., the crown ether polymer) included in the crown ether coating 70 may have a weight average molecular weight (Mw) of less than 500,000 g/mol. In one embodiment, the polymer material included in the crown ether coating 70 may have a weight average molecular weight of 50,000 g/mol or more and less than 500,000 g/mol, for example, 50,000 g/mol to 300,000 g/mol. Within the above range, the crown ether coating 70 may more effectively suppress swelling and expansion of the core particle 60, while providing sufficient flexibility to accommodate the insertion of the conductive particles 80.

In some embodiments, a content of the crown ether coating 70 based on the total weight of the core particles 60 may be about 0.01 wt% to 5 wt%, or 0.1 wt% to 3 wt%.

In some embodiments, the crown ether coating 70 may have a thickness of 1 nm to 100 nm, 10 nm to 100 nm, or 10 nm to 80 nm. Within the above range, the mechanical/chemical stability may be further improved without degrading the anode activity of the core particle 60 and the charge and discharge capacities of the lithium secondary battery.

In some embodiments, when a carbon coating is formed on the core particle 60, a ratio of the thickness of the crown ether coating 70 to the thickness of the carbon coating may be greater than 0 and 5 or less, or 0.3 to 3.

Within the above range, swelling, expansion, and collapse of the core particle 60 caused by repeated charging and discharging cycles may be further suppressed, while preventing an increase in internal resistance and a decrease in output.

The conductive particles 80 may increase or supplement the electronic conductivity of the crown ether coating 70 or the anode active material 50.

The conductive particles 80 may be formed on the crown ether coating 70 or embedded in the crown ether coating 70. For example, the conductive particles 80 may be attached to the surface of the crown ether coating 70. For example, at least a portion of the conductive particles 80 may be embedded within the crown ether coating 70.

In some embodiments, the conductive particles 80 may be discontinuously distributed on the surface of the crown ether coating 70. For example, the conductive particles 80 may be present in the form of individual islands in localized regions of the outer surface of the crown ether coating 70.

In some embodiments, the conductive particles 80 may be continuously and uniformly distributed on the surface of the crown ether coating 70. For example, the conductive particles 80 may be present in the form of a film covering at least a portion of the surface of the crown ether coating 70. In one embodiment, the conductive particles 80 may surround the entire outer surface of the crown ether coating 70 and substantially form a single-layer coating.

In some embodiments, the conductive particles 80 may be disposed so as not to be in contact with the core particle 60. For example, the conductive particles 80 may be formed only on the crown ether coating 70 or may be present within the crown ether coating 70 without being in contact with the core particle 60.

Since the crown ether coating 70 includes a crown ether compound, the conductive particles 80 may have high ionic conductivity even if they are not in contact with the core particle 60. In addition, since the core particle 60 and the conductive particles 80 are disposed so as not to be in physical contact with each other, cracks and physical damage to the core particle 60, which may occur during the attachment of the conductive particles 80, can be prevented.

In one embodiment, when the crown ether coating 70 is partially formed on the outer surface of the core particle 60, at least a portion of the conductive particles 80 may be attached to regions of the outer surface of the core particle 60 where the crown ether coating 70 is not formed. For example, a portion of the conductive particles 80 may be disposed on the crown ether coating 70, and other portions may be disposed on the core particle 60.

In some embodiments, at least a portion of the conductive particles 80 may be embedded within the crown ether coating 70. For example, at least a portion of the conductive particles 80 may be embedded within the crown ether coating 70 and protrude from the surface of the crown ether coating 70.

In one embodiment, at least a portion of the conductive particles 80 may penetrate through the crown ether coating 70 and come into contact with the surface of the core particle 60. For example, at least a portion of the conductive particles 80 may be embedded within the crown ether coating 70 and may come into contact with the surface of the core particle 60.

In addition, at least a portion of the conductive particles 80 may be embedded within the crown ether coating 70 and embedded within the core particle 60.

The high output and high capacity characteristics of the anode active material may be secured by the conductive particles 80. For example, as the conductive particles 80 are embedded within the crown ether coating 70, they may come into contact with the crown ether compound inside the crown ether coating 70. Therefore, an additional migration pathway for ions/electrons may be provided within the crown ether coating 70 by the conductive particles 80, thereby further increasing the output/capacity of the lithium secondary battery.

The conductive particles 80 may include lithium titanate (LTO), Super P, carbon black, acetylene black, Ketjen black, carbon flakes, activated carbon, graphene, carbon nanotubes, carbon nanofibers, metal fibers, etc. These may be used alone or in combination of two or more thereof.

In some embodiments, the content of the conductive particles 80 based on the total weight of the core particles 60 may be 0.01 wt% to 5 wt%, or 0.03 wt% to 2 wt%. Within the above range, sufficient conductive pathways may be provided without inhibiting the anode activity of the core particle 60.

In one embodiment, the mean particle diameter of the conductive particles 80 may be equal to or greater than the thickness of the crown ether coating 70. For example, the mean particle diameter of the conductive particles 80 may be greater than the thickness of the crown ether coating 70. For example, the mean particle diameter of the conductive particles 80 may be calculated as the mean of actual measurements obtained by selecting a predetermined number (for example, 100 or more) of particles from an SEM cross-sectional image of the anode active material layer 120, and measuring the diameters of each particle.

For example, the ratio of the thickness of the crown ether coating 70 to the mean particle diameter of the conductive particles 80 may be about 0.001 or more. If the ratio is less than 0.001, a uniform protective film formation may not be practically achieved, and a sufficient suppression effect on side reactions may not be obtained.

According to exemplary embodiments, the anode active material 50 may be prepared according to the method and process described below.

For example, the core particle 60 including the above-described graphite-based or silicon-based active material may be prepared. Then, the crown ether coating 70 may be formed on the core particle 60.

The crown ether coating 70 may be formed by a wet coating method. For example, a coating solution including a crown ether compound may be mixed with the core particles 60, and then stirred at a first rotation speed. Thereafter, the polymer material may be solidified through heat treatment or drying to form the crown ether coating 70.

After the crown ether coating 70 is formed, the conductive particles 80 may be formed by performing wet or dry surface treatment. For example, the conductive particles 80 may be wet-mixed or dry-mixed with the core particles 60 having the crown ether coating 70 formed thereon, and then stirred at a second rotation speed to allow the conductive particles 80 to be attached to the crown ether coating 70.

The dry surface treatment may be performed using, for example, a ball mill, roller mill, high-energy mill, stirred mill, planetary mill, vibration mill, Nobilta mill, mechanofusion system, or high speed mixer, etc.

The wet surface treatment may be performed using, for example, a spraying method, coprecipitation method, dipping method, stirring method, or an extruder, etc.

The second rotation speed may be greater than the first rotation speed. For example, the second rotation speed may be in a range of about 1,000 rpm to 2,000 rpm, and the first rotation speed may be in a range of about 10 rpm to 100 rpm.

Within the above rotation speed range, the conductive particles 80 may be distributed in the pattern of individual islands without damaging the crown ether coating 70 formed in a thin film form.

### <Secondary battery>

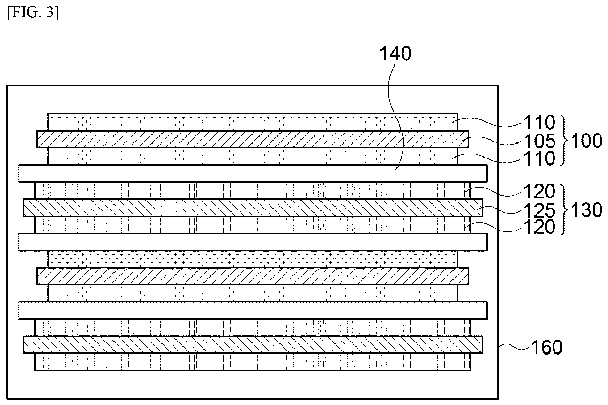

FIGS. 2 and 3 are a schematic plan view and a cross-sectional view of a secondary battery according to exemplary embodiments, respectively. For example, FIG. 3 is a cross-sectional view taken on line I-I' shown in FIG. 2 in a thickness direction of the lithium secondary battery.

Referring to FIGS. 2 and 3, the secondary battery may be provided as the lithium secondary battery. According to exemplary embodiments, the secondary battery may include an electrode assembly 150 and a case 160 in which the electrode assembly 150 is housed. The electrode assembly 150 may include a cathode 100, an anode 130 and a separation membrane 140.

The cathode 100 may include a cathode current collector 105 and a cathode active material layer 110 formed on at least one surface of the cathode current collector 105. According to exemplary embodiments, the cathode active material layer 110 may be formed on both surfaces (e.g., upper and lower surfaces) of the cathode current collector 105. For example, the cathode active material layer 110 may be formed on the upper and lower surfaces of the cathode current collector 105, respectively, and may be directly coated on the surface of the cathode current collector 105.

The cathode current collector 105 may include, for example, stainless steel, nickel, aluminum, titanium, copper, or an alloy thereof, and preferably includes aluminum or an aluminum alloy.

The cathode active material layer 110 includes lithium metal oxide as a cathode active material, and according to exemplary embodiments, may include lithium (Li)-nickel (Ni)-based oxide.

In some embodiments, the lithium metal oxide included in the cathode active material layer 110 may be represented by Formula 1 below.

[Formula 1] Li₁₊ₐNi_{1-(x+y)}CoₓM_{y}O₂

In Formula 1 above, α, x and y may satisfy -0.05≤a≤0.15, 0.01≤x≤0.2, 0≤y≤0.2, and M may be at least one element selected from the group consisting of Mg, Sr, Ba, B, Al, Si, Mn, Ti, Zr and W. In one embodiment, x and y may satisfy 0.01≤x≤0.20, 0.01≤y≤0.15.

Preferably, in Formula 1, M may be manganese (Mn). In this case, nickel-cobalt-manganese (NCM)-based lithium oxide may be used as the cathode active material.

For example, nickel (Ni) may be provided as a metal associated with the capacity of the lithium secondary battery. The higher the content of nickel, the greater the improvement in capacity and output of the lithium secondary battery. However, if the content of nickel increases excessively, the lifespan of the lithium secondary battery may be reduced, and it may be disadvantageous in terms of mechanical and electrical stabilities. For example, cobalt (Co) may be a metal associated with the conductivity or resistance of the lithium secondary battery. In one embodiment, M includes manganese (Mn), and Mn may be provided as a metal associated with the mechanical and electrical stability of the lithium secondary battery.

Through the above-described interaction between nickel, cobalt and manganese, the capacity, output, low resistance, and lifespan stability of the cathode active material layer 110 may be improved simultaneously.

For example, a slurry may be prepared by mixing the cathode active material with a binder, a conductive material and/or a dispersant in a solvent, followed by stirring the same. The slurry may be coated on the cathode current collector 105, followed by compression and drying to prepare the cathode active material layers 110.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the cathode active material layer 110 may be reduced and an amount of the cathode active material or lithium metal oxide particles may be relatively increased, thereby improving the output and capacity of the secondary battery.

The conductive material may be included to facilitate electron migration between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as LaSrCoO₃, and LaSrMnO₃.

In some embodiments, the cathode 100 may have an electrode density of 3.0 to 3.9 g/cc, and preferably 3.2 to 3.8 g/cc.

The anode 130 may include the anode current collector 125 and an anode active material layer 120 formed on at least one surface of the anode current collector 125. According to exemplary embodiments, the anode active material layer 120 may be formed on both surfaces of the anode current collector 125. For example, the anode active material layer 120 may be coated on upper and lower surfaces of the anode current collector 125, respectively, and may be in direct contact with the surface of the anode current collector 125.

The anode current collector 125 may include gold, stainless steel, nickel, aluminum, titanium, copper, or an alloy thereof, and preferably copper or a copper alloy.

According to exemplary embodiments, the anode active material layer 120 may include an anode active material according to the above-described embodiments. For example, the anode active material may be included in an amount of 80 wt% to 99 wt%, or 90 wt% to 98 wt%, based on the total weight of the anode active material layer 120.

For example, an anode slurry may be prepared by mixing the anode active material with a binder, a conductive material and/or a dispersant in a solvent. The anode slurry may be applied to (coated on) the anode current collector 125, followed by compressing (pressing) and drying to prepare the anode active material layer 120.

Materials substantially the same as or similar to those used for forming the cathode 100 may be used as the binder and the conductive material. In some embodiments, the binder for forming the anode 130 may include, for example, styrene-butadiene rubber (SBR) or an acrylic binder to match with the graphite-based active material, and may be used together with a thickener such as carboxymethyl cellulose (CMC).

In exemplary embodiments, the anode active material layer 120 may have a density of 1.4 to 1.9 g/cc.

In some embodiments, the anode 130 may have an area (e.g., a contact area with the separation membrane 140) and/or volume larger than those/that of the cathode 100. Thereby, lithium ions generated from the cathode 100 may smoothly migrate to the anode 130 without being precipitated in the middle, thereby further improving the output and capacity characteristics.

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane may include a nonwoven fabric made of glass fiber having a high melting point, polyethylene terephthalate fiber or the like.

The separation membrane 140 may extend between the cathode 100 and the anode 130 in the second direction, and may be folded and wound in the thickness direction of the lithium secondary battery. Accordingly, a plurality of cathodes 100 and anodes 130 may be laminated in the thickness direction with the separation membrane 140 interposed therebetween.

According to exemplary embodiments, an electrode cell is defined by the cathode 100, the anode 130, and the separation membrane 140, and a plurality of electrode cells are stacked to form, for example, a jelly-roll type electrode assembly 150. For example, the electrode assembly 150 may be formed by winding, laminating, folding, and the like the separation membrane 140.

The electrode assembly 150 is housed in the case 160, and an electrolyte may be simultaneously injected into the case 160. The case 160 may include, for example, a pouch, a can, or the like in shape.

According to exemplary embodiments, a non-aqueous electrolyte may be used as the electrolyte.

The non-aqueous electrolyte includes a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, γ-butyrolactone, propylene sulfite, tetrahydrofurane, and the like may be used. These compounds may be used alone or in combination of two or more thereof.

As illustrated in FIG. 2, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

In FIG. 2, the cathode lead 107 and the anode lead 127 are shown as being formed on the same side of the lithium secondary battery or case 160, but they may alternatively be formed on the opposite sides.

For example, the cathode lead 107 may be formed on one side of the case 160, and the anode lead 127 may be formed on the other side of the case 160.

The lithium secondary battery may be manufactured, for example, in a cylindrical shape using a can, a square shape, a pouch shape or a coin shape.

Hereinafter, experimental examples including specific examples and comparative examples are proposed to facilitate understanding of the present invention. However, the following examples are only given for illustrating the present invention and are not intended to limit the appended claims. It will be apparent those skilled in the art that various alterations and modifications are possible within the scope and spirit of the present invention, and such alterations and modifications are duly included in the appended claims.

### Examples and Comparative Examples

### Example 1

### (1) Preparation of anode

100 g of artificial graphite particles (D50: 10 µm) were put into a mixer (manufactured by Inoue) together with a mixed solution of 4 g of 18-crown-6-ether and ethanol, then mixed and stirred at a stirring speed of 20 Hz for 2 hours, followed by drying the mixture at 60°C in a vacuum state.

Super P (mean particle diameter: 150 nm) was added to the artificial graphite active material having the crown ether coating (coating thickness: 50 nm) formed thereon in an amount of 0.5 wt% relative to the artificial graphite, and high-speed surface treatment was performed using a nobilta mill at a stirring speed of 1100 rpm for 10 minutes.

The prepared anode active material, CMC, and SBR were mixed in a weight ratio of 97.3:1.2:1.5 to prepare an anode slurry. The anode slurry was applied to a Cu foil, followed by drying and pressing the same to prepare an anode having a slurry density of 10 mg/cm² and 1.7 g/cc.

### (2) Preparation of cathode

LiNi_{0.8}Co_{0.1}Mn_{0.1}O₂ as a cathode active material, carbon black as a conductive material, and polyvinylidene fluoride (PVDF) as a binder were mixed in a weight ratio of 92:5:3 to prepare a cathode slurry, then the cathode slurry was applied to an aluminum substrate, followed by drying and pressing the same to prepare a cathode.

### (3) Manufacturing of secondary battery

The prepared cathodes and anodes were arranged with a polyethylene (PE) separation membrane (thickness: 13 µm) interposed therebetween to form electrode cells, and the electrode cells were stacked to form an electrode assembly. The electrode assembly was housed in a pouch, and the electrode tab portions were fused. Thereafter, an electrolyte containing 1 M LiPF₆ in a mixed solvent of ethylene carbonate/ethyl methyl carbonate (EC/EMC, 3/7 by volume ratio) was injected, and then the pouch was sealed to manufacture a secondary battery.

### Example 2

A secondary battery was manufactured in the same manner as in Example 1, except for the inclusion of 10 g of 18-crown-6-ether in the preparation of the anode active material.

### Example 3

A secondary battery was manufactured in the same manner as in Example 1, except for the inclusion of 0.5 g of 18-crown-6-ether in the preparation of the anode active material.

### Example 4

A secondary battery was manufactured in the same manner as in Example 1, except for the inclusion of 0.1 g of 18-crown-6-ether in the preparation of the anode active material.

### Example 5

A secondary battery was manufactured in the same manner as in Example 1, except for the inclusion of 4 g of 12-crown-4-ether instead of 18-crown-6-ether in the preparation of the anode active material.

### Example 6

A secondary battery was manufactured in the same manner as in Example 1, except that the thickness of the crown ether coating was formed to 200 nm in the preparation of the anode active material.

### Comparative Example 1

A secondary battery was manufactured in the same manner as in Example 1, except that artificial graphite, where no crown ether coating or Super-P was formed, was used as the anode active material.

### Comparative Example 2

A secondary battery was manufactured in the same manner as in Example 1, except that no crown ether coating was formed in the preparation of the anode active material.

### Comparative Example 3

A secondary battery was manufactured in the same manner as in Example 1, except that the crown ether coating included 4 g of LiOH instead of 18-crown-6-ether in the preparation of the anode active material.

### Comparative Example 4

A secondary battery was manufactured in the same manner as Example 1, except that Super-P formation was omitted in the preparation of the anode active material.

### Experimental Example

### (1) Evaluation of initial efficiency

Charging (CC/CV 0.5C 4.2V 0.05C CUT-OFF) and discharging (CC 0.5C 2.5V CUT-OFF) were performed on the secondary batteries according to the examples and comparative examples to measure the initial charge/discharge capacities (CC: Constant Current, CV: Constant Voltage).

Thereafter, the initial efficiency was evaluated as the percentage of the value obtained by dividing the initial discharge capacity by the initial charge capacity.

### (2) Evaluation of capacity retention rate

The secondary batteries according to the examples and comparative examples were subjected to 500 repeated charge/discharge cycles at 25 °C, with one cycle consisting of charging (CC/CV, 0.5C, 4.2V, cut-off 0.05C) and discharging (CC, 0.5C, 2.5V cut-off). Subsequently, the capacity retention rate was evaluated as the percentage of a value obtained by dividing the discharge capacity at 500-th cycle by the discharge capacity at the first cycle.

### (3) Fast-charging performance characteristics

The secondary batteries of the examples and comparative examples were charged (CC/CV, 0.3C, 4.2V, cut-off 0.05C) and discharged (CC, 0.3C, 2.5V cut-off) at 25°C to measure the initial discharge capacity A. Subsequently, the batteries were subjected to 150 repeated charge/discharge cycles at 25 °C, with one cycle consisting of fast-charging to SOC 80% using stepwise current values in the range of 1.25C to 3.0C and discharging to SOC 8% under a condition of 0.3C.

After 150 cycles were performed, the batteries were charged (CC/CV, 0.3C, 4.2V, cut-off 0.05C) and discharged (CC, 0.3C, 2.5V cut-off) to measure the discharge capacity B. The fast-charging characteristics were evaluated as the percentage of a value obtained by dividing the discharge capacity B by the initial discharge capacity A.

The evaluation results are shown in Table 1 below.

**[TABLE 1]**

| Item | Initial efficiency (%) | Capacity retention rate (%) | Fast-charging performance (%) |
|---|---|---|---|
| Example 1 | 90.2 | 94.8 | 93.7 |
| Example 2 | 90.3 | 94.0 | 90.1 |
| Example 3 | 90.0 | 94.1 | 92.0 |
| Example 4 | 89.1 | 93.2 | 91.5 |
| Example 5 | 90.5 | 95.1 | 94.1 |
| Example 6 | 88.4 | 94.5 | 92.8 |
| Comparative Example 1 | 85.5 | 90.7 | 87.8 |
| Comparative Example 2 | 86.3 | 92.9 | 89.0 |
| Comparative Example 3 | 89.0 | 93.3 | 88.9 |
| Comparative Example 4 | 88.8 | 93.2 | 89.7 |

Referring to Table 1, the examples, which included an anode active material including a crown ether coating containing crown ether and conductive particles, exhibited improvements in all the initial efficiency, lifespan, (i.e., cycle life), and fast-charging performance were improved. On the other hand, the comparative examples exhibited reduced initial efficiency, cycle life, and fast-charging performance compared to the examples.

## Claims

1. An anode active material for a lithium secondary battery comprising:
a core particle;
a crown ether coating formed on the core particle and comprising a crown ether compound; and
conductive particles formed on the crown ether coating or within the crown ether coating.

2. The anode active material for a lithium secondary battery according to claim 1, wherein the core particle comprises a graphite-based active material, an amorphous carbon-based active material, a silicon-based active material, or a mixture of two or more thereof.

3. The anode active material for a lithium secondary battery according to claim 1, wherein the core particle comprises at least one of natural graphite and artificial graphite.

4. The anode active material for a lithium secondary battery according to claim 1, wherein the crown ether coating has a thickness of 1 nm to 100 nm.

5. The anode active material for a lithium secondary battery according to claim 1, wherein the crown ether compound comprises a nitrogen atom (N) or a sulfur atom (S).

6. The anode active material for a lithium secondary battery according to claim 1, wherein the crown ether compound comprises at least one selected from the group consisting of 10-crown-3, 11-crown-3, aza-11-crown-3, 12-crown-3, aza-12-crown-3, 12-crown-4, benzo-12-crown-4, tetrathia-12-crown-4, aza-12-crown-4, diaza-12-crown-4, 14-crown-4, tetrathia-14-crown-4, benzo-14-crown-4, dibenzo-14-crown-4, didecalino-14-crown-4, decalino-14-crown-4, 15-crown-5, aza-15-crown-5, diaza-15-crown-5, benzo-15-crown-5, dibenzo-15-crown-5, cyclohexane-15-crown-5, 16-crown-4, 16-crown-5, 18-crown-6, hexathia-18-crown-6, aza-18-crown-6, diaza-18-crown-6, benzo-18-crown-6, dibenzo-18-crown-6.

7. The anode active material for a lithium secondary battery according to claim 1, wherein a content of the crown ether compound is 0.01% by weight to 5% by weight based on a total weight of the core particle.

8. The anode active material for a lithium secondary battery according to claim 1, wherein the crown ether coating is composed of the crown ether compound.

9. The anode active material for a lithium secondary battery according to claim 1, wherein the conductive particles cover the entire crown ether coating.

10. The anode active material for a lithium secondary battery according to claim 1, wherein at least a portion of the conductive particles is embedded within the crown ether coating and protrudes from the surface of the crown ether coating.

11. The anode active material for a lithium secondary battery according to claim 1, wherein the conductive particles are disposed so as not to be in contact with the core particle.

12. The anode active material for a lithium secondary battery according to claim 1, wherein at least a portion of the conductive particles penetrates through the crown ether coating.

13. The anode active material for a lithium secondary battery according to claim 1, wherein the conductive particles comprise at least one of lithium titanate (LTO), Super P, carbon black, acetylene black, Ketjen black, carbon flakes, activated carbon, graphene, carbon nanotubes (CNT), carbon nanofibers (CNF), metal fibers, and metal particles.

14. The anode active material for a lithium secondary battery according to claim 1, further comprising a carbon coating which is formed between the core particle and the crown ether coating, and covers the outer surface of the core particle.

15. The anode active material for a lithium secondary battery according to claim 14, wherein the carbon coating comprises an amorphous carbon-based material.

16. The anode active material for a lithium secondary battery according to claim 14, wherein a ratio of a thickness of the crown ether coating to a thickness of the carbon coating is greater than 0 and 5 or less.

17. A lithium secondary battery comprising:
a cathode; and
an anode disposed to face the cathode and comprising the anode active material for a lithium secondary battery according to claim 1.
